# EUROPEAN PATENT SPECIFICATION

(11) **EP 2 051 442 B1**
(45) Date of publication and mention of the grant of the patent: **11.09.2013**
(21) Application number: 07785383.6
(22) Date of filing: 30.07.2007
(51) Int. Cl.: H04L 12/24, H04J 14/02

(54) **METHOD, SYSTEM AND APPARATUS FOR PROTECTING WAVELENGTH DIVISION MULTIPLEX TRANSMISSION**
VERFAHREN, SYSTEM UND VORRICHTUNG ZUM SCHUTZ EINER WELLENLÄNGENMULTIPLEX-ÜBERTRAGUNG
PROCÉDÉ, SYSTÈME ET APPAREIL POUR PROTÉGER UNE TRANSMISSION À MULTIPLEXAGE PAR RÉPARTITION EN LONGUEUR D'ONDE

(30) Priority: 09.08.2006 CN 200610110579
(43) Date of publication of application: 22.04.2009
(73) Proprietor: Huawei Technologies Co., Ltd., Longgang District, Shenzhen Guangdong 518129 (CN)
(72) Inventor: LI, Hanguo, Shenzhen, Guangdong 518129 (CN); CHEN, Ming, Shenzhen, Guangdong 518129 (CN); HONG, Bin, Shenzhen, Guangdong 518129 (CN)
(74) Representative: Isarpatent
(86) International application number: PCT/CN2007/070380
(87) International publication number: WO 2008/019608

(56) References cited:
- EP-A1- 1 361 688
- WO-A-92/11709
- CN-A- 1 642 060
- US-A1- 2004 076 431
- CHIENE J ET AL: "RESILIENCE ISSUES FOR WDM OPTICAL ACCESS NETWORKS" PROCEEDINGS OF THE EUROPEAN CONFERENCE ON NETWORKS AND OPTICAL COMMUNICATIONS 2000. NOC 2000. WDM AND PHOTONIC NETWORKS; [PROCEEDINGS OF THE EUROPEAN CONFERENCE ON NETWORKS AND OPTICAL COMMUNICATIONS. NOC], AMSTERDAM : IOS PRESS, NL, 1 January 2000 (2000-01-01), pages 130-137, XP000993836 ISBN: 978-1-58603-068-1
- ZHANG Z: "PROTECTION AND RESTORATION IN IP OVER OPTICAL NETWORKS" OPTICAL NETWORKS MAGAZINE, SPIE, BELLINGHAM, WA, US, vol. 2, no. 2, 1 March 2001 (2001-03-01), page 6,08,10, XP001081254 ISSN: 1388-6916

## Description

This application claims the priority of a Chinese Patent Application CN1968141A filed on August 9, 2006, titled "METHOD AND DEVICE FOR PROTECTING WDM TRANSMISSION SYSTEM".

### FIELD OF THE INVENTION

The present invention relates to the transmission of communication field, and in particular, to a method, a system and a device for protecting Wavelength Division Multiplex (WDM) transmission in Metro Access Network.

### BACKGROUND OF THE INVENTION

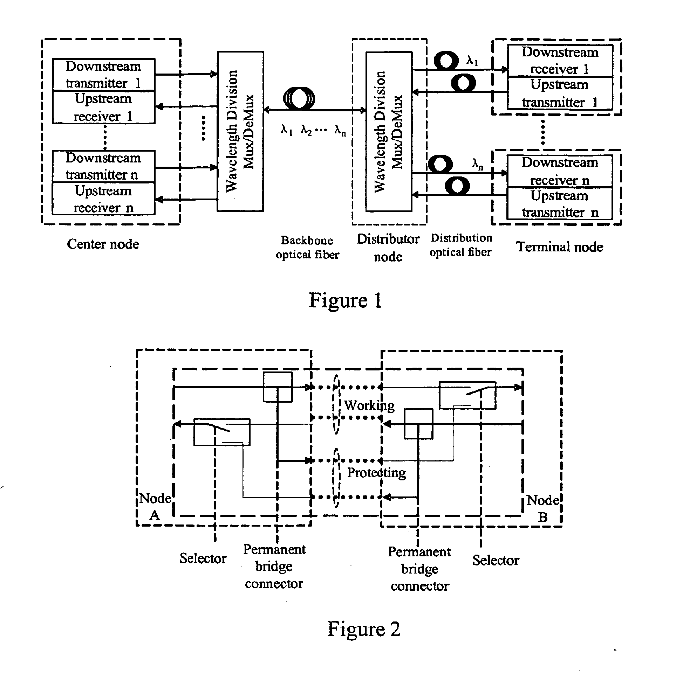

In the Metro Access Network, Passive Optical Network (PON) is a most popular fiber access approach conventionally. However, with an optical fiber, the highest speed of only 1.25Gbps or 2.5Gbps may be supported, while, in practice, the speed of a network card commonly used in a computer of a user is up to 100Mbps, and the access bandwidth is only 2Mbps may be provided, which may not satisfy the increasing demands of the customers. As a result, a fiber access with higher bandwidth is required. WDM technologies have already been commercialized for use in large scale in Backbone Network and Metro Area Network (MAN), and its bandwidth may be upgraded and expanded continuously by adding wavelengths with the demands. With the fast increase of the access bandwidth, it has been a trend for WDM technologies to be applied to the access layer. While, conventionally, Point-to-Point transmission is used in WDM technologies, which results in a high cost for applying WDM technologies on the access layer. Therefore, a new technology is needed to reduce the application cost. In the prior art, a combination of WDM technologies and PON technologies is commonly used, as shown in Figure 1, there are respectively a plurality of n downstream transmitters and n upstream receivers at a center node, which are respectively used for transmitting an optical wavelength service in the downstream path and for receiving an optical protection with 1+1 is shown in Figure 2 where a permanent bridge connection is used. A downstream and upstream, two-way service signals exist between a transmitting-end node A and a receiving-end node B, both of which have a working path and a backup path. The downstream service signal at node A first passes through a permanent-bridge-connection splitter (such as an optical coupler) which splits the service signal sent from the transmitting-end node A into totally the same two-way signals which respectively are transmitted via the working path and the backup path; and a selector (such as an optical switch) is used at the receiving-end node B for selecting one of the two-way signals. The protection switching of the upstream service signal may be realized in the same way as above stated.

Now an example is provided with a downstream service from the node A to the node B. Because the node B detects the services both in the working path and in the backup path simultaneously, and when a fault occurs in the working path and is detected by the node B, the fault is reported and the selective switch of the node B is controlled to be switched from the working path to the backup path so as to realize the protection of the service. The fault detection and the switching are performed at a same node without informing another node; therefore, the interaction of messages is not required between two nodes via communication protocols. This way is referred as a single-end switch. Similarly, a same mechanism is used for the service from the node B to the node A.

In the prior art, the single-end switch mode, in which both the detection and switching are made at the receiving end, is used for the 1+1 protection scheme, and a permanent bridge connection is made at the transmitting end. In this mode, a device for switching selection is required at the receiving end. When this scheme is applied in a bi-directional transmission network, a power supply is required at the both end nodes. When the scheme is applied in a Metro Access Network, power must be supplied at the switching node if the downstream path is required to be protected. If only the fiber from the center node to the distribution node in Figure 1 is to be switched with protection, the distribution node shall works in active mode; therefore, a Passive Optical Network (PON) technique may not be implemented.

In the optical fiber access, the optical fiber is connected from the center node to a number of buildings or residential areas, and then connected to the devices in the machine room of the residential areas or the buildings. In real network constructions, fibers are commonly laid by the side of road or the building in advance; and when there presents a user in the areas and the buildings, the optical fiber is connected with the laid fibers. Because a device requiring a power supply may not be used for the distribution in the middle, a fiber distribution node by the side of road or building is required to be a passive distributor device, while the center node and the terminal node at the ends of the fiber may be supplied with power in the machine room.

Power may be supplied both at the center node and the terminal node, while the distributor node, which is generally placed by the side of road or at a relatively simple environment, has no power supply. If dual-transmission-selective-reception of the downstream service is to be performed, a power supply is required to be provided at this distributor node for implementing switching action of an optical switch or an electrical switch. In order to guarantee the reliability of the equipment, peripheral devices, such as air conditioners are always needed to ensure the environment temperature and moisture under which the equipment and devices run may meet the requirements of the reliability thereof, which accordingly causes a huge cost for the construction of the distributor node.
Chiene J. et al. disclose in "Resilience issues for WDM optical Access Networks" (Proceedings of the European Conference on Networks and Optical Communications NOC, 2000-1-1, Pages 130-137) a self-healing ring architecture, using optical protection techniques, to be deployed within the future WDM optical access network.
Zhang Z. discloses in "Protection and Restoration in IP Over Optical Networks" (Optical Networks Magazine, Vol. 2, no. 2, 2001-3-1) a protection and restoration architecture for IP over Optical Networks. The networks considered are transports optical networks consisting of OXC (Optical cross-Connect) DWDM (Dense wavelength Division Multiplexing) transport devices. An optical network has an IP control plane that runs the routing protocols as well as MPLS signaling protocols.

### SUMMARY OF THE INVENTION

An embodiment of the invention provides a method, a system and a device for protecting WDM transmission, which may actualize a passive distributor node so as to reduce the total cost of network construction.

An embodiment of the invention provides a method for protecting WDM transmission, where in a first transmission direction, a first node transmits a service to a second node via one path selected from the two transmission paths protected mutually, and the second node receives the service in the two transmission paths, i.e. performs a dual reception; in a second transmission direction opposite to the first transmission direction, the second node transmits a service to the first node via two transmission path protected mutually, i.e., performs a dual transmission, and the first node receives the service via one path selected from the two transmission paths.

An embodiment of the invention further provides a system for protecting WDM transmission, which includes a first node and a second node connected with each other via an optical fiber in the WDM system; the first node includes, a selective-transmission module adapted to transmit a service to a second node via one path selected from two transmission paths protected mutually in a first transmission direction, and a selective-reception module adapted to receive a service from the second node via one path selected from two transmission paths protected mutually in a second transmission direction; the second transmission direction is opposite to the first transmission direction; the second node includes, a dual-reception module adapted to receive the service from the first node via the two transmission paths protected mutually, i.e. perform a dual reception, in the first transmission direction; and a dual-transmission module adapted to transmit the service to the first node via the two transmission paths protected mutually, i.e. perform a dual transmission, in the second transmission direction.

It can be seen from the above technical solution in the invention, an asymmetric protection scheme is utilized in opposite transmission directions, in other words, selective transmission and dual reception is performed in a first transmission direction, while dual transmission and selective reception is performed in an opposite second transmission direction. This allows a distributor node without a dedicated power supply or other equipments such as air conditioners, so as to largely reduce the construction cost of a WDM access network with protection function.

### BRIEF DESCRIPTION OF THE DRAWINGS

Figure 1 is a schematic diagram showing the architecture of a WDM-PON in the prior art;

Figure 2 is a schematic diagram showing the architecture of 1+1 protection scheme in the prior art;

Figure 3 is a schematic diagram showing a system for protecting a WDM working path provided in a first embodiment of the invention;

Figure 4 is a flow chart showing self-healing protection with selective-transmission-dual-reception for a downstream service provided in the first embodiment of the invention;

Figure 5 is a 1+1 protection scheme of sub-network connection provided in a second embodiment of the invention;

Figure 6 is a schematic diagram showing an architecture of WDM-PON network including a passive distributor node according to an embodiment of the invention; and

Figure 7 is a schematic diagram showing architecture of a system for protecting WDM transmission according to an embodiment of the invention.

### DETAILED DESCRIPTION OF THE EMBODIMENTS

In an embodiment of the invention, an asymmetrical protection scheme is utilized for a dedicated scenario of an access network. In other words, in a downstream path (i.e. a path in a first transmission direction), such a solution that selective transmission is performed at a transmitting end and dual reception is performed at a receiving end is employed; while in an upstream path (i.e. a path in a second transmission direction opposite to the first transmission direction), such a solution that dual transmission is performed at the transmitting end and selective reception is performed at the receiving end. In this way, a selective mode is used for both the reception and transmission at the side of a center node, while a permanent connection mode is used for a distributor node near the side of users. The distributor node implemented in such a way is not provided with a selective switch, thus may be implemented with a passive device without a power supply, so that peripheral devices such as air conditioners are not required to ensure the working environment temperature and moisture of the devices and equipments to reduce the cost. It is to be appreciated by the skilled in the art, "upstream" and "downstream" is opposite names which represent two transmission directions oppositely. In the embodiments of the invention, "upstream" corresponds to a first transmission direction, and "downstream" corresponds to a second transmission direction opposite to the first transmission direction.

Further descriptions will be made in the invention with reference to the accompanied drawings and embodiments. The permanent bridge connector may include a couple in the embodiments of the invention.

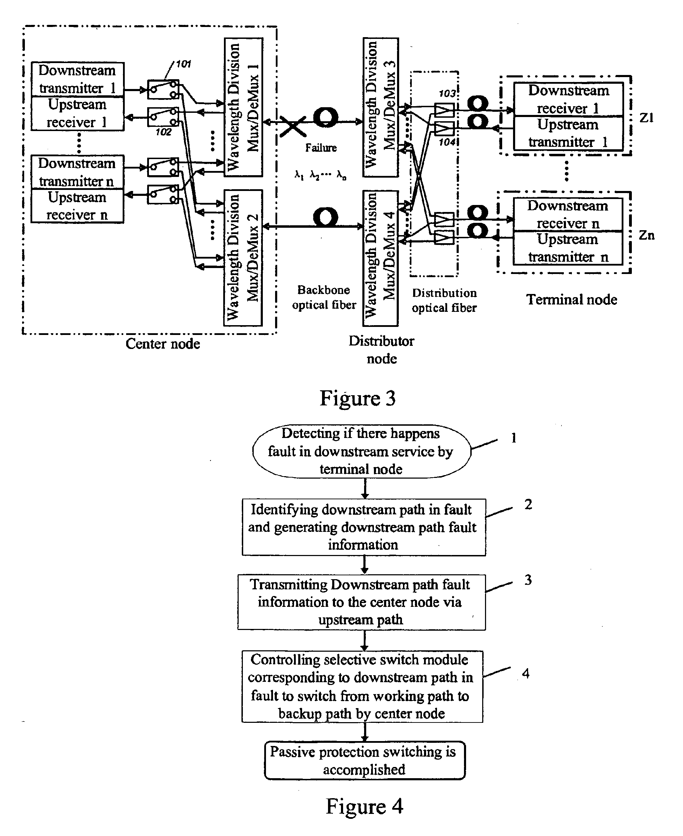

A first embodiment of the invention provides a schematic diagram of a system for protecting a WDM working path, as shown in Figure 3, Z1,...,Zn are a plurality of n terminal nodes.

A center node is provided with a WDM transceiver with a plurality of wavelengths, a downstream transmitter 1 with a certain wavelength and a selective switch module 101 a downstream service is sent thereto. The two outputs of the selective switch module 101 are connected respectively with a Wavelength Division Mux/DeMux 1 and a Wavelength Division Mux/DeMux 2. The Wavelength Division Mux/DeMux 1 is connected with a Wavelength Division Mux/DeMux 3 at a distributor node via a backbone optical fiber as a working path, and the Wavelength Division Mux/DeMux 2 is connected with a Wavelength Division Mux/DeMux 4 at the distributor node via a backbone optical fiber as a backup path. The downstream service passing through the Wavelength Division Mux/DeMux 1 is inputted to an input of a coupler 103 via the Wavelength Division Mux/DeMux 3, and the downstream service passing through the Wavelength Division Mux/DeMux 2 is inputted to another input of the coupler 103 via the Wavelength Division Mux/DeMux 4. Finally, the downstream service is outputted by an aggregate output port of the coupler 103 and inputted to a downstream receiver 1 at a terminal node via a distribution optical fiber.

An upstream service at this wavelength is in an opposite direction to the downstream service. First, an upstream transmitter 1 sends the upstream service to the aggregate input port of a coupler 104. Two same signals are outputted by two output ports of the coupler 104 and then inputted into the Wavelength Division Mux/DeMux 3 and the Wavelength Division Mux/DeMux 4 respectively. The upstream service passing through the Wavelength Division Mux/DeMux 3 is inputted to an input port of a selective switch module 102 via the Wavelength Division Mux/DeMux 1, and the upstream service passing through the Wavelength Division Mux/DeMux 4 is inputted to another input port of the selective switch module 102 via the Wavelength Division Mux/DeMux 2. Finally, the upstream service is outputted by an output port of the selective switch module and inputted to an upstream receiver 1 at the center node via the distribution optical fiber.

Accordingly, the transmission process of upstream and downstream services at other wavelengths is similar as above.

It can be summarized from the above description of the embodiment of the invention that, in a first transmission direction, a first node (e.g. the center node in the above embodiment) transmits a service to a second node (e.g. the distributor node in the above embodiment) via one path selected from two transmission paths protected mutually, and the second node receives the service via both of the two transmission paths. In a second transmission direction opposite to the first transmission direction, the second node transmits a service to the first node via two transmission paths protected mutually, and the first node receives the service via one path selected from the two transmission paths.

In particular, by way of an example in which a first node is a center node and a second node is a distributor node, in a first transmission direction, the center node transmits a service to a distributor node via one path, as a working path carrying the service, selected from two transmission paths protected mutually from the center node to the distributor node. The distributor node receives the service via the two permanently connected transmission paths from the center node to the distributor node. In a second transmission direction (an opposite direction to the first transmission direction), the distributor node transmits a service to the center node via two transmission paths protected mutually between the distributor node and the center node; and the center node transmits the service to customer side via a path selected from the two transmission paths as a working path.

It can be seen that, in the embodiment of the invention, a passive second node may be provided using the asymmetrical protection scheme in the different transmission directions.

The above Wavelength Division Mux/DeMux may be implemented with an Optical Add/Drop Multiplexer (OADM) or a Multiplexer/Demultiplexer (Mux/DeMux) unit; the selective switch module may use an optical switch; and the Wavelength Division Mux/DeMux and the coupler may be implemented in a single node or separate nodes.

As shown in Figure 3, when fault occurs in the working path from the center node to the distributor node, fault detection is performed at other nodes since the distributor node is passive and unavailable for fault detection, and the center node is informed of the fault for switching. In the technical solution shown in Figure 3, only the optical fiber from the center node to the distributor node is protected, it is to be appreciated that the integral optical fiber from the center node to the terminal node (i.e. a third node) may be protected to extend the protection scope.

Concerning a downstream service from the center node to the distributor node, because a fault detection unit simply exists at an active node, the downstream service fault may only be detected by the terminal node. A flow chart of an embodiment of showing self-healing protection with selective-transmission-dual-reception for a downstream service is shown in Figure 4.

In Step 1, the terminal node detects whether there occurs a fault in the downstream service.

A fault detection point may use one of the following approaches for detection: detecting the power of an optical signal split from that to be inputted to the receiving end; detecting whether the service is present or correct using the receiver; or detecting the dedicated overhead of the service to determine whether the service is correct.

In Step 2, the downstream path in fault is identified and downstream path fault information is generated.

In Step 3, the downstream path fault information is transmitted to the center node via an upstream path.

The transmission of the downstream path fault information to the center node may be implemented by using overhead information of the wavelength of the upstream service, or using Out-of-band transmission via an optical monitoring channel, or using a dedicated alarm byte in the upstream service.

In Step 4, the center node controls a selective switch module corresponding to the downstream path in fault to switch from the working path to the backup path.

It can be seen from the Step 1 to 4 above, in this embodiment of detection of the downstream service, the center node performs selective switching for the downstream transmission path based on the upstream path fault information fed by the terminal node via the downstream path.

Concerning an upstream service from the terminal node to the center node via the distributor node, the center node is provided with a fault detection unit and also a selective switch module for protection switching. Upon detection of a fault occurring in the upstream working path, the center node controls the corresponding selective switch module to select a backup path for single-end switching.

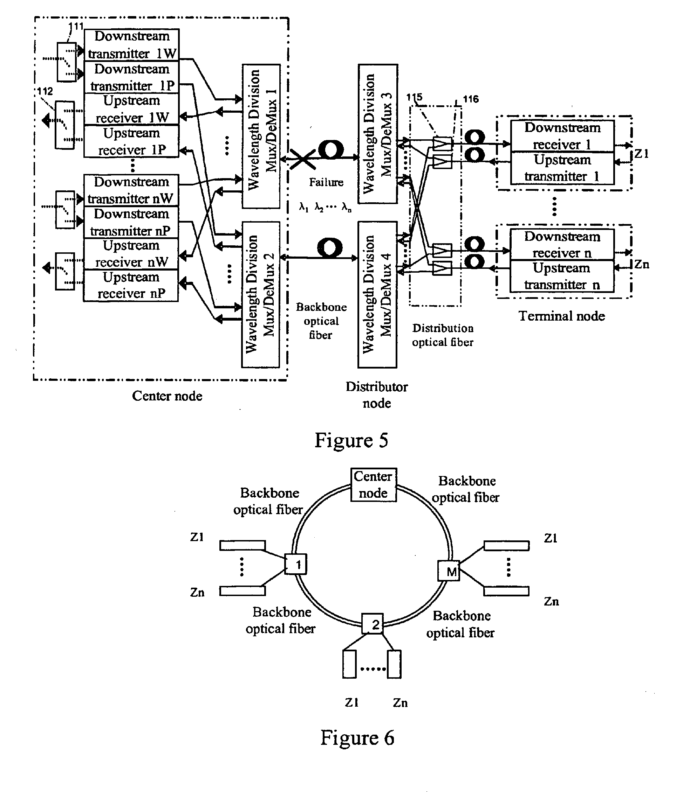

In order to improve further reliability of a WDM transmission system, a second embodiment of the invention is provided with reference to Figure 5 which shows a structural diagram of a selective-transmission-dual-reception 1+1 protection system of sub-network connection, where Z1,..., Zn are a plurality of n terminal nodes, so that the protection switching may be implemented not only when a fault occurs in the working path, but also when a fault occurs in the transmitter or receiver.

The selective switch module here is located between customer signal and a WDM wavelength transceiver. For example, a selective switch module 111 by which a downstream service at a certain wavelength passes may be implemented with an optical switch or an electrical switch. Because the selective switch module 111 is located in front of a transmitter, two transmission modules, i.e. a downstream transmitter 1W and a downstream transmitter 1P, are provided at two outputs of the selective switch module 111 for selective transmission of the downstream service at the certain wavelength. The downstream transmitter 1W and the downstream transmitter 1P are respectively connected with a Wavelength Division Mux/DeMux W and a Wavelength Division Mux/DeMux P. The Wavelength Division Mux/DeMux W is connected with a Wavelength Division Mux/DeMux 3 at a distributor node via a backbone optical fiber as a working path, and the Wavelength Division Mux/DeMux P is connected with a Wavelength Division Mux/DeMux 4 at the distributor node 4 via a backbone optical fiber as a backup path. The downstream service passing through the Wavelength Division Mux/DeMux W is inputted to an input of a coupler 115 via the Wavelength Division Mux/DeMux 3, and the downstream service passing through the Wavelength Division Mux/DeMux P is inputted to another input of the coupler 115 via the Wavelength Division Mux/DeMux 4. Finally, the downstream service is outputted by an aggregate output port of the coupler 115 and inputted to a downstream receiver 1 at a terminal node Z1 via a distribution optical fiber, so as to realize the selective-transmission-dual-reception of the downstream service.

An upstream service at this wavelength is in an opposite direction to the downstream service. First, an upstream transmitter 1 at the terminal node Z1 sends the upstream service to an aggregate input port of a coupler 116; two same signals are outputted by two output ports of the coupler 116 and then inputted into the Wavelength Division Mux/DeMux 3 and the Wavelength Division Mux/DeMux 4 respectively; the upstream service passing through the Wavelength Division Mux/DeMux 3 is inputted to an upstream receiver 1W via the Wavelength Division Mux/DeMux W, and the upstream service passing through the Wavelength Division Mux/DeMux 4 is inputted to an upstream receiver 1P via the Wavelength Division Mux/DeMux P; finally, the upstream service outputted from the upstream receiver 1W and 1P passes through two inputs of a selective switch module 112 respectively, and is outputted from an output port of the selective switch module 112 upon selection, so as to realize the dual-transmission-selective-reception of the upstream service.

Accordingly, the transmission process of upstream and downstream services at other wavelengths is similar as above.

In the first and second embodiments of the invention, only one distributor node is provided. However, in practical use, a plurality of distributor nodes may be provided. In a WMD-PON network architecture including a passive distributor node as shown in Figure 6, module 1, 2, ..., M are a plurality of M distributor nodes in the WDM-PON network, each of which corresponds to terminal nodes from Z1 to Zn, and connects with a center node via a backbone optical fiber as a working path and a backup path respectively.

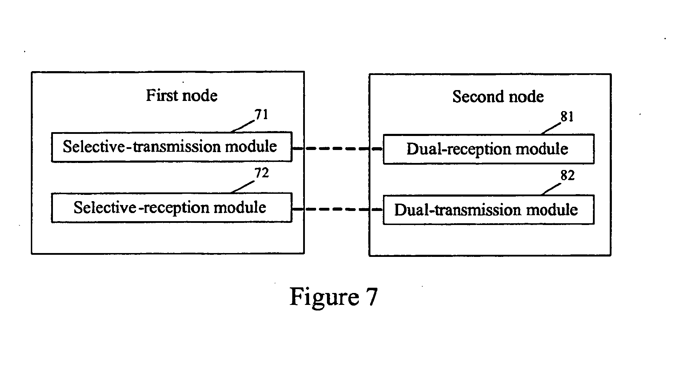

An embodiment of the invention also provides a system for protecting WDM transmission. Please refer to Figure 7 showing a structural diagram of the system for protecting WDM transmission according to an embodiment of the invention. Here the internal structure and connection relations will be illustrated in detail in conjunction with the working principles of the system.

The system in this embodiment includes a first node and a second node connected with each other via an optical fiber in a WDM system. In particular, the first node includes a selective-transmission module 71 and a selective-reception module 72; and the second node includes a dual-reception module 81 and a dual-transmission module 82.

In a first transmission direction from the first node to the second node, the selective-transmission module 71 at the first node transmits a service to the second node via one path selected from two transmission paths protected mutually, and then the dual-reception module 81 at the second node receives the service sent from the first node via both of the two transmission paths protected mutually, i.e. performs a dual reception.

In a second transmission direction from the second node to the first node (i.e. an direction opposite to the first transmission direction), the dual-transmission module 82 at the second node transmits a service to the first node via two transmission paths protected mutually, i.e. perform a dual transmission, and then the selective-reception module 72 at the first node receives the service sent from the second node via one path selected from the two transmission paths protected mutually.

In particular, the dual-reception module 81 may include a dual-reception permanent bridge connector; the dual-transmission module 82 may include a dual-transmission permanent bridge connector; and the selective-transmission module 71 and the selective-reception module 72 may include a selective switch module.

It can be seen from the structure described above, it is not necessary for the second node to select the transmission path, but keep a permanent connection. Therefore, the second node may not be provided with a power supply device; thus may be passive to reduce the total construction cost of the network. The first node in the above system may be a center node in a WDM system, and the second node may be a distributor node in the WDM system. Vice versa, i.e. the first node in the above system may be a distributor node and the second node may be a center node. It is to be appreciated by the skilled in the art that, when an asymmetrical protection scheme is applied in different transmission directions in a system, one of the nodes may be passive, and it is not intended to limit which one of the nodes may be passive in the embodiments of the invention.

An embodiment of the invention further provides a device for protecting WDM transmission. The node device may be the first node or the second node in the embodiments of the system. The internal structure of the first node and the second node has already been described in the above embodiments of the system; therefore it will not be described here again.

The above description is only for exemplary embodiments and not used to limit the scope of the invention. Various changes and equivalent substitutions without departing from the technical scope of the invention that readily occurred to the skilled in the art shall be covered within the scope of the invention defined by the appended Claims.

## Claims

1. A method for protecting Wavelength Division Multiplex, WDM, transmission, **characterized by** comprising,
transmitting, by a first node, a service to a second node via one path selected from two transmission paths protected mutually in a first transmission direction; and receiving, by the second node, the service via the two transmission paths in the first transmission direction; and
transmitting, by the second node, a service to the first node via two transmission path protected mutually in a second transmission direction opposite to the first transmission direction; and receiving, by the first node, the service via one path selected from the two transmission paths in the second transmission direction.

2. The method according to claim 1, wherein the first node is a center node in a WDM transmission system; and the second node is a distributor node in the WDM transmission system.

3. The method according to claim 2, wherein the transmission process in the first transmission direction comprises,
transmitting, by the center node, a service to the distributor node via one path, as a working path carrying the service, selected from the two transmission paths protected mutually from the center node to the distributor node; and
receiving, by the distributor node, the service carried in two permanently connected transmission paths from the center node to the distributor node.

4. The method according to claim 2, wherein the transmission process in the second transmission direction comprises,
transmitting, by the distributor node, a service to the center node via the two transmission paths protected mutually between the distributor node and the center node respectively; and
transmitting, by the center node, the service to customer side via a path selected from the two transmission paths as a working path.

5. The method according to any one of claims 1 to 4, further comprising,
in the first transmission direction, transmitting, by the second node, the service to a third node upon reception of the service from the first node; and
in the second transmission direction, receiving, by the second node, the service from the third node before transmitting a service to the first node via two transmission path protected mutually by the second node.

6. The method according to claim 2, further comprising,
performing, by the first node, selective switching for the transmission path in the first transmission direction based on path fault information in the first transmission direction fed back by the third node via the path in the second transmission direction.

7. The method according to claim 6, wherein the process for performing selective switching for the transmission path in the first transmission direction by the first node comprises,
detecting, by the third node, if there occurs a fault in the service in the first transmission direction;
transmitting, by the third node, path fault information in the first transmission direction to the first node via the path in the second transmission direction, upon detection of a fault occurring in the service in the first transmission direction; and
switching, by the first node, the service in the first transmission direction from the working path to a backup path between the two transmission paths protected mutually.

8. The method according to claim 5, wherein the third node is a terminal node.

9. The method according to any one of claims 1 to 4, further comprising,
detecting, by the first node, if there occurs a fault in the service in the second transmission direction; and
performing, by the first node, selective switching for the receiving path in the second transmission direction, upon detection of a fault occurring in the service in the second transmission direction.

10. A system for protecting Wavelength Division Multiplex, WDM, transmission, comprising a first node and a second node connected with each other via two optical fibers in the WDM system, **characterized in that**,
the first node comprises,
a selective-transmission module (71) adapted to transmit a service to a second node via one path selected from two transmission paths protected mutually in a first transmission direction, and
a selective-reception module (72) adapted to receive a service from the second node via one path selected from two transmission paths protected mutually in a second transmission direction; wherein the second transmission direction is opposite to the first transmission direction;
the second node comprises,
a dual-reception module (81) adapted to receive the service from the first node via the two transmission paths protected mutually in the first transmission direction; and
a dual-transmission module (82) adapted to transmit the service to the first node via the two transmission paths protected mutually in the second transmission direction.

11. The system according to claim 10, wherein the first node is a center node and the second node is a distributor node.

## Patentansprüche

1. Verfahren zum Schützen einer Wellenlängenmultiplex-Übertragung, WDM-Übertragung, **dadurch gekennzeichnet, dass** es Folgendes umfasst:
Übertragen durch einen ersten Knoten eines Diensts zu einem zweiten Knoten auf einem Pfad, der aus zwei gegenseitig geschützten Übertragungspfaden gewählt ist, in einer ersten Übertragungsrichtung; und Empfangen durch den zweiten Knoten des Diensts auf den zwei Übertragungspfaden in der ersten Übertragungsrichtung; und
Übertragen durch den zweiten Knoten eines Diensts zu dem ersten Knoten auf zwei gegenseitig geschützten Übertragungspfaden in einer zweiten Übertragungsrichtung,
die zu der ersten Übertragungsrichtung entgegengesetzt ist; und Empfangen durch den ersten Knoten des Diensts auf einem Pfad, der aus den zwei Übertragungspfaden gewählt ist, in der zweiten Übertragungsrichtung.

2. Verfahren nach Anspruch 1, wobei der erste Knoten ein Mittelknoten in einem WDM-Übertragungssystem ist; und der zweite Knoten ein Verteilerknoten in dem WDM-Übertragungssystem ist.

3. Verfahren nach Anspruch 2, wobei der Übertragungsprozess in der ersten Übertragungsrichtung Folgendes umfasst:
Übertragen durch den Mittelknoten eines Diensts zu dem Verteilerknoten auf einem Pfad als einen Arbeitspfad, der den Dienst führt, der aus den zwei gegenseitig geschützten Übertragungspfaden von dem Mittelknoten zu dem Verteilerknoten gewählt ist; und
Empfangen durch den Verteilerknoten des Diensts, der in zwei dauerhaft verbundenen Übertragungspfaden von dem Mittelknoten zu dem Verteilerknoten geführt wird.

4. Verfahren nach Anspruch 2, wobei der Übertragungsprozess in der zweiten Übertragungsrichtung Folgendes umfasst:
Übertragen durch den Verteilerknoten eines Diensts zu dem Mittelknoten auf den zwei jeweiligen gegenseitig geschützten Übertragungspfaden zwischen dem Verteilerknoten und dem Mittelknoten; und
Übertragen durch den Mittelknoten des Diensts zu einer Kundenseite auf einem aus den zwei Übertragungspfaden gewählten Pfad als einem Arbeitspfad.

5. Verfahren nach einem der Ansprüche 1 bis 4, das ferner Folgendes umfasst:
in der ersten Übertragungsrichtung Übertragen durch den zweiten Knoten des Diensts zu einem dritten Knoten bei Empfang des Diensts von dem ersten Knoten; und
in der zweiten Übertragungsrichtung Empfangen durch den zweiten Knoten des Diensts von dem dritten Knoten vor dem Übertragen eines Diensts zu dem ersten Knoten auf zwei gegenseitig geschützten Übertragungspfaden durch den zweiten Knoten.

6. Verfahren nach Anspruch 2, das ferner Folgendes umfasst:
Ausführen durch den ersten Knoten eines selektiven Schaltens für den Übertragungspfad in der ersten Übertragungsrichtung anhand von Pfadfehlerinformationen in der ersten Übertragungsrichtung, die von dem dritten Knoten auf dem Pfad in der zweiten Übertragungsrichtung zurückgeleitet werden.

7. Verfahren nach Anspruch 6, wobei der Prozess zum Ausführen eines selektiven Schaltens für den Übertragungspfad in der ersten Übertragungsrichtung durch den ersten Knoten Folgendes umfasst:
Detektieren durch den dritten Knoten, ob in dem Dienst in der ersten Übertragungsrichtung ein Fehler auftritt;
Übertragen durch den dritten Knoten von Pfadfehlerinformationen in der ersten Übertragungsrichtung zu dem ersten Knoten auf dem Pfad in der zweiten Übertragungsrichtung, wenn ein in dem Dienst auftretender Fehler in der ersten Übertragungsrichtung detektiert wird; und
Schalten durch den ersten Knoten des Diensts in der ersten Übertragungsrichtung von dem Arbeitspfad zu einem Sicherungspfad zwischen den zwei gegenseitig geschützten Übertragungspfaden.

8. Verfahren nach Anspruch 5, wobei der dritte Knoten ein Abschlussknoten ist.

9. Verfahren nach einem der Ansprüche 1 bis 4, das ferner Folgendes umfasst:
Detektieren durch den ersten Knoten, ob ein Fehler in dem Dienst in der zweiten Übertragungsrichtung auftritt; und
Ausführen durch den ersten Knoten eines selektiven Schaltens für den empfangenden Pfad in der zweiten Übertragungsrichtung, wenn ein Fehler, der in dem Dienst in der zweiten Übertragungsrichtung auftritt, detektiert wird.

10. System zum Schützen einer Wellenlängenmultiplex-Übertragung, WDM-Übertragung, das einen ersten Knoten und einen zweiten Knoten, die über zwei Lichtleitfasern in dem WDM-System miteinander verbunden sind, umfasst, **dadurch gekennzeichnet, dass**
der erste Knoten Folgendes umfasst:
ein Modul (71) für selektive Übertragung, das dafür ausgelegt ist, einen Dienst zu einem zweiten Knoten auf einem Pfad, der aus zwei gegenseitig geschützten Übertragungspfaden gewählt ist, in einer ersten Übertragungsrichtung zu übertragen,
und
ein Modul (72) für selektiven Empfang, das dafür ausgelegt ist, einen Dienst von dem zweiten Knoten auf einem Pfad, der aus zwei gegenseitig geschützten Übertragungspfaden gewählt ist, in einer zweiten Übertragungsrichtung zu empfangen; wobei die zweite Übertragungsrichtung zu der ersten Übertragungsrichtung entgegengesetzt ist;
wobei der zweite Knoten Folgendes umfasst:
ein Doppelempfangsmodul (81), das dafür ausgelegt ist, den Dienst von dem ersten Knoten über die zwei gegenseitig geschützten Übertragungspfade in der ersten Übertragungsrichtung zu empfangen; und
ein Doppelübertragungsmodul (82), das dafür ausgelegt ist, den Dienst zu dem ersten Knoten über die zwei gegenseitig geschützten Übertragungspfade in der zweiten Übertragungsrichtung zu übertragen.

11. System nach Anspruch 10, wobei der erste Knoten ein Mittelknoten ist und der zweite Knoten ein Verteilerknoten ist.

## Revendications

1. Procédé pour protéger une transmission à multiplexage par répartition en longueur d'onde, WDM, le procédé étant **caractérisé en ce qu'**il comprend les étapes consistant à :
transmettre, par un premier noeud, un service à un deuxième noeud par l'intermédiaire d'un trajet choisi parmi deux trajets de transmission mutuellement protégés dans un premier sens de transmission ; et recevoir, par le deuxième noeud, le service par l'intermédiaire des deux trajets de transmission dans le premier sens de transmission ; et
transmettre, par le deuxième noeud, un service au premier noeud par l'intermédiaire de deux trajets de transmission mutuellement protégés dans un deuxième sens de transmission opposé au premier sens de transmission ; et recevoir, par le premier noeud, le service par l'intermédiaire d'un trajet choisi parmi les deux trajets de transmission dans le deuxième sens de transmission.

2. Procédé selon la revendication 1, dans lequel le premier noeud est un noeud central dans un système de transmission WDM ; et le deuxième noeud est un noeud distributeur dans le système de transmission WDM.

3. Procédé selon la revendication 2, dans lequel l'étape de transmission dans le premier sens de transmission comprend les étapes consistant à :
transmettre, par le noeud central, un service au noeud distributeur par l'intermédiaire d'un trajet utilisé comme trajet de travail acheminant le service, choisi parmi les deux trajets de transmission mutuellement protégés depuis le noeud central jusqu'au noeud distributeur ; et
recevoir, par le noeud distributeur, le service acheminé sur deux trajets de transmission reliés de façon permanente depuis le noeud central jusqu'au noeud distributeur.

4. Procédé selon la revendication 2, dans lequel l'étape de transmission dans le deuxième sens de transmission comprend les étapes consistant à :
transmettre, par le noeud distributeur, un service au noeud central par l'intermédiaire des deux trajets de transmission mutuellement protégés respectivement entre le noeud distributeur et le noeud central ; et
transmettre, par le noeud central, le service d'un côté client par l'intermédiaire d'un trajet choisi parmi les deux trajets de transmission utilisé comme trajet de travail.

5. Procédé selon l'une quelconque des revendications 1 à 4, comprenant en outre les étapes consistant à :
dans le premier sens de transmission, transmettre, par le deuxième noeud, le service à un troisième noeud dès réception du service en provenance du premier noeud ; et
dans le deuxième sens de transmission, recevoir, par le deuxième noeud, le service en provenance du troisième noeud avant de transmettre, par le deuxième noeud, un service au premier noeud par l'intermédiaire de deux trajets de transmission mutuellement protégés.

6. Procédé selon la revendication 2, comprenant en outre l'étape consistant à :
effectuer, par le premier noeud, une commutation sélective pour le trajet de transmission dans le premier sens de transmission sur la base d'informations de panne de trajet dans le premier sens de transmission renvoyées par le troisième noeud par l'intermédiaire du trajet dans le deuxième sens de transmission.

7. Procédé selon la revendication 6, dans lequel l'étape consistant à effectuer, par le premier noeud, une commutation sélective pour le trajet de transmission dans le premier sens de transmission comprend les étapes consistant à :
détecter, par le troisième noeud, si une panne se produit dans le service dans le premier sens de transmission ;
transmettre, par le troisième noeud, des informations de panne de trajet dans le premier sens de transmission au premier noeud par l'intermédiaire du trajet dans le deuxième sens de transmission, dès détection d'une panne se produisant dans le service dans le premier sens de transmission ; et
commuter, par le premier noeud, le service dans le premier sens de transmission du trajet de travail sur un trajet de réserve entre les deux trajets de transmission mutuellement protégés.

8. Procédé selon la revendication 5, dans lequel le troisième noeud est un noeud terminal.

9. Procédé selon l'une quelconque des revendications 1 à 4, comprenant en outre les étapes consistant à :
détecter, par le premier noeud, si une panne se produit dans le service dans le deuxième sens de transmission ; et
effectuer, par le premier noeud, une commutation sélective pour le trajet de réception dans le deuxième sens de transmission, dès détection d'une panne se produisant dans le service dans le deuxième sens de transmission.

10. Système pour protéger une transmission à multiplexage par répartition en longueur d'onde, WDM, comprenant un premier noeud et un deuxième noeud, reliés entre eux par deux fibres optiques dans le système WDM, le système étant **caractérisé en ce que** :
le premier noeud comprend :
un module de transmission sélective (71) apte à transmettre un service à un deuxième noeud par l'intermédiaire d'un trajet choisi parmi deux trajets de transmission mutuellement protégés dans un premier sens de transmission, et
un module de réception sélective (72) apte à recevoir un service en provenance du deuxième noeud par l'intermédiaire d'un trajet choisi parmi deux trajets de transmission mutuellement protégés dans un deuxième sens de transmission ; lequel deuxième sens de transmission est opposé au premier sens de transmission ;
le deuxième noeud comprend :
un module de réception double (81) apte à recevoir le service en provenance du premier noeud par l'intermédiaire des deux trajets de transmission mutuellement protégés dans le premier sens de transmission ; et
un module de transmission double (82) apte à transmettre le service au premier noeud par l'intermédiaire des deux trajets de transmission mutuellement protégés dans le deuxième sens de transmission.

11. Système selon la revendication 10, dans lequel le premier noeud est un noeud central et le deuxième noeud est un noeud distributeur.
